# EUROPÄISCHE PATENTSCHRIFT

(11) **EP 2 557 325 B1**
(45) Veröffentlichungstag und Bekanntmachung des Hinweises auf die Patenterteilung: **02.09.2015**
(21) Anmeldenummer: 12173330.7
(22) Anmeldetag: 25.06.2012
(51) Int. Cl.: F16C 41/00

(54) **Lageranordnung mit Encodersystem**
Bearing unit with encoder system
Agencement de palier avec système de codage

(30) Priorität: 10.08.2011 DE 102011080741
(43) Veröffentlichungstag der Anmeldung: 13.02.2013
(73) Patentinhaber: Schaeffler Technologies AG & Co. KG, 91074 Herzogenaurach (DE)
(72) Erfinder: Mock, Christian, 97421 Schweinfurt (DE); Königer, Florian, 97422 Schweinfurt (DE)

(56) Entgegenhaltungen:
- EP-A1- 0 726 468
- EP-A1- 2 133 698
- DE-A1- 10 338 956
- DE-A1- 10 338 960
- FR-A1- 2 843 332
- JP-A- 2009 036 235
- JP-A- 2009 174 703
- US-A1- 2005 175 267

## Beschreibung

### Gebiet der Erfindung

Lageranordnung mit einem Lager, insbesondere Wälzlager als Radlager für Kraftfahrzeuge, mit einem drehfesten einen Lageraußenring aufnehmenden Lagerträger und einer mittels zumindest eines Lagerinnenringes drehbar geführten Achswelle, mit einer Dichtungsanordnung zwischen den Lagerringen, mit einem Encodersystem mit einem ringförmigen, magnetischen Impulserzeuger, auch Encoder bezeichnet, der mit dem Lagerinnenring verbunden ist, und mit einem Impulsnehmer, der am Lageraußenring befestigt ist, wobei der magnetische Impulserzeuger oder Encoder als Ringmantel ausgebildet und der Impulsnehmer radial zum Ringmantel angeordnet ist.

Ein derartiges Encodersystem mit Impulsnehmer ist insbesondere zur Messung der Rotationsgeschwindigkeit bzw. des Drehwinkels des gelagerten Rades oder zur Ableitung weiterer Zustandsgrößen zweckmäßig oder erforderlich.

### Hintergrund der Erfindung

Es ist ein Encodersystem bekannt, JP 2009 036 235 A, das einen Ringmantel aufweist, dessen Impulsnehmer radial zum Ringmantel angeordnet ist. Der Impulsnehmer ist jedoch durch eine Öffnung im Lagerträger eingebaut. Am Lageraußen- und der Lagerinnenring sind Absätze angebracht, an denen das gesamte Encodersystem angebaut, aufgepresst oder angeschraubt ist. Das Encodersystem stellt ein Anhängsel an das Lager dar, das mit großem Aufwand an die Lagerringe angebaut ist und darüber hinaus auch während des Transports und der Montage leicht beschädigt werden kann.

Auch bei der bekannten JP 2009 174 703 A ist das Encodersystem außen an einen Lager angeordnet. Dabei wurden der Lageraußen- und der Lagerinnenring modifiziert, um das Encodersystem anzubauen, das eine Verbreiterung des Lagers mit im Wesentlichen ungeschütztem Encoder bildet, der leicht durch Schmutz und ferromagnetischen Partikeln beschädigt und gestört werden kann. Um eine Verschmutzung während des Betriebs zu verhindern, wird alternativ eine topfartige Erweiterung vorgeschlagen, die eine erhebliche Verbreiterung verursacht.

Bei der FR 2 843 332 A1 und der EP 0 726 468 A1 sind die Impulserzeuger bzw. Encoder scheibenförmig ausgebildet, so dass die Impulserzeuger seitlich die Scheibe kontaktieren. Bei der FR 2 843 332 A1 ist der Impulsnehmer in einer Ausnehmung des Lageraußenringes eingesetzt, während bei der EP 0 726 468 A1 der Impulsnehmer im Lagerträger vorgesehen ist. Bei beiden besteht jedoch das Problem, dass Schmutz eindringen und sich verklemmen kann und dass die magnetischen Impulserzeuger frei laufen, so dass sie ferromagnetische Teile anziehen können, die sich an den Oberflächen anlagern.

Die US 2005/0175267 A1 offenbart gemäß den Figuren 1 bis 3 ein Encodersystem, bei dem der Impulserzeuger nicht als Ringmantel sondern als Scheibe ausgebildet ist. Der Impulsnehmer ist außerhalb des Lagers am Lagerträger befestigt und ragt vor bis zu dem Impulsgeber außerhalb des Lagerbereichs. Das Encodersystem ist dabei frei zugänglich, kann durch eingeklemmten Schmutz beschädigt werden und kann ferromagnetische Partikel anziehen. Bei der Ausgestaltung gemäß den Figuren 4 und 5 ist der Encoder als Ringmantel ausgebildet und das Encodersystem durch eine Abdichtung geschützt. Nachteilig ist jedoch, dass das Encodersystem einen großen Raum beansprucht und am Lagerträger und an der Achswelle abgestützt ist, so dass erhebliche Änderungen und Anpassungen auch an diesen Bauteilen erforderlich sind. Dies führt zu einer kosten- und bauaufwendigen Ausgestaltung des Encodersystems.

Die DE 103 38 960 A1 und DE 103 38 956 A1, die bezüglich der vorliegenden Erfindung gleichbedeutend sind und daher zusammen gewürdigt werden können, beschreiben Encodersysteme, die ebenfalls von außen an ein Lager angebaut sind. Dazu wurde der Lageraußenring in der Breite verkürzt und der Lagerinnenring etwas verlängert, um Platz für das Encodersystem zu schaffen, das außen an den Lageraußenring und auf den Lagerinnenring angesetzt ist. Das Encodersystem ist damit während der Montage und während des Transports nicht geschützt. Der Impulserzeuger oder Encoder ist im Durchmesser soweit vergrößert, dass er fast die Außenmaße des Lageraußenringes erreicht. Dies ist auch erforderlich um ihn möglichst nahe an den außen auf dem Schutzmantel angebrachten Impulsnehmer heranzuführen. Wo und wie der Impulsnehmer angeordnet oder befestigt ist, ist nicht ersichtlich.

Bei der EP 2 133 698 A1 ist das Encodersystem ebenfalls von außen auf den Lagerinnen- und an den Lageraußenring angebaut, wozu der Lageraußenring modifiziert wurde. Auch bei diesem Encodersystem stehen erhebliche Teile vor, die leicht beschädigt werden können. Da der Impulsnehmer in einem Ring integriert ist, der außen am Lageraußenring angesetzt und befestigt ist, wird der axiale Bauraum des Lagers stark erweitert.

### Aufgabe der Erfindung

Aufgabe der Erfindung ist es, die Nachteile der zuvor beschriebenen Lageranordnung zu vermeiden und ein Encodersystem zur Verfügung zu stellen, das schmutzunanfällig, langfristig betriebssicher funktionstüchtig ist und darüber hinaus mit einfachen Mitteln kostengünstig hergestellt werden kann. Das Encodersystem soll auch so am Lager angebaut und integriert sein, dass während des Transports und der Montage keine Beschädigungen zu befürchten sind.

### Zusammenfassung der Erfindung

Die Aufgabe der Erfindung wird dadurch gelöst, dass der Lageraußenring zumindest eine Ausnehmung für den Impulsnehmer aufweist, die am Rand des Lagerträgers oder Lageraußenringes angeordnet ist, dass die Dichtungsanordnung ein Trägerelement aufweist, das mit einem Zylinderflansch innerhalb des Lageraußenringes im Bereich der Ausnehmung fixiert ist, und dass der Ringmantel innerhalb des Zylinderflansches des Trägerelementes angeordnet ist.

Dadurch ist der Encoder nicht mehr frei zugänglich sondern geschützt angeordnet. An der Lageraußenseite ist nur eine Trägerscheibe offen zugänglich. Steinschlag und sonstige Verschmutzungen treffen daher nicht den magnetischen Impulserzeuger. Auch der Impulsnehmer steht nicht außerhalb des Lagers vor sondern ist radial am Lageraußenring in der Lagerbreite angeordnet.

Der Lageraußenring weist zur Aufnahme des Impulsnehmers eine oder auch mehrere Ausnehmungen auf, durch die er mit dem Encoder- Ringmantel in Wirkverbindung tritt. Die Ausnehmung ist als durchgehende Öffnung ausgebildet, die als rundes Loch oder in anderer Form ausgeführt sein kann. Zur einfachen Herstellung kann die Ausnehmung am Rand des Lagerträgers oder Lageraußenringes angeordnet und im Wesentlichen halbkreisförmig oder halbellyptisch oder eckig ausgeführt sein. Die Ausnehmung wird dabei durch einen Zylinderflansch des Trägerelementes der Dichtungsanordnung radial von innen verschlossen. Um die magnetische Übertragung nicht zu beeinflussen, ist zumindest der Zylinderflansch des Trägerelements aus nicht ferromagnetischem Werkstoff hergestellt. Der Impulsnehmer ist damit innerhalb der Lagerbegrenzung geschützt angeordnet und auch von innen durch das Trägerelement bez. einen Zylinderflansch des Trägerelementes abgeschirmt.

Auch der Ringmantel des Impulserzeugers, der innerhalb des Zylinderflansches des Trägerelementes eingebaut ist, ist damit geschützt innerhalb der Lagerbegrenzung angeordnet.

Der Ringmantel kann eine Encoderfunktionsschicht aus magnetischem Material aufweisen, wobei das magnetische Material vorzugsweise eine Kunststoff- oder Elastomerschicht beinhaltet, die mit magnetischen Partikeln angefüllt ist. Die Encoderfunktionsschicht weist zumindest eine Spur mit magnetischer Kodierung auf, die abwechselnd mit Nord- und Südpolen magnetisiert ist. Die Encoderfunktionsschicht kann auch mehrere Spuren mit unterschiedlicher Kodierung aufweisen, wobei dann der Impulsnehmer auch mehrere Aufnehmer, z. B. nebeneinander angeordnete Aufnahmeköpfe aufweisen kann.

Der Ringmantel kann aber auch ein Encoderträgerblech aus ferromagnetischem Werkstoff mit Öffnungen oder Löchern aufweisen, wobei die Löcher durch Kunststoff oder Elastomer ohne magnetische Partikel verschlossen sind.

Der Ringmantel kann aber auch eine Zahnstruktur aufweisen und aus ferromagnetischem Werkstoff hergestellt sein, wobei die Herstellung der Zahnstruktur vorzugsweise durch Umformen des Ringmantels erfolgt.

Eine weitere Verbesserung der Dichtung und Unempfindlichkeit der Lageranordnung, des Encoders und Impulsnehmers wird dadurch erreicht, dass der Ringmantel einen radialen Dichtflansch aufweist, der den Zylinderflansch des Trägerelementes überragt und mit diesem und/oder mit der Stirnfläche des Lageraußenringes oder Lagerträgers einen Dichtspalt bildet.

### Kurze Beschreibung der Zeichnungen

Zur weiteren Erläuterung der Erfindung wird auf die Zeichnungen verwiesen, in denen Ausführungsbeispiele der Erfindung vereinfacht dargestellt sind.

Es zeigen:

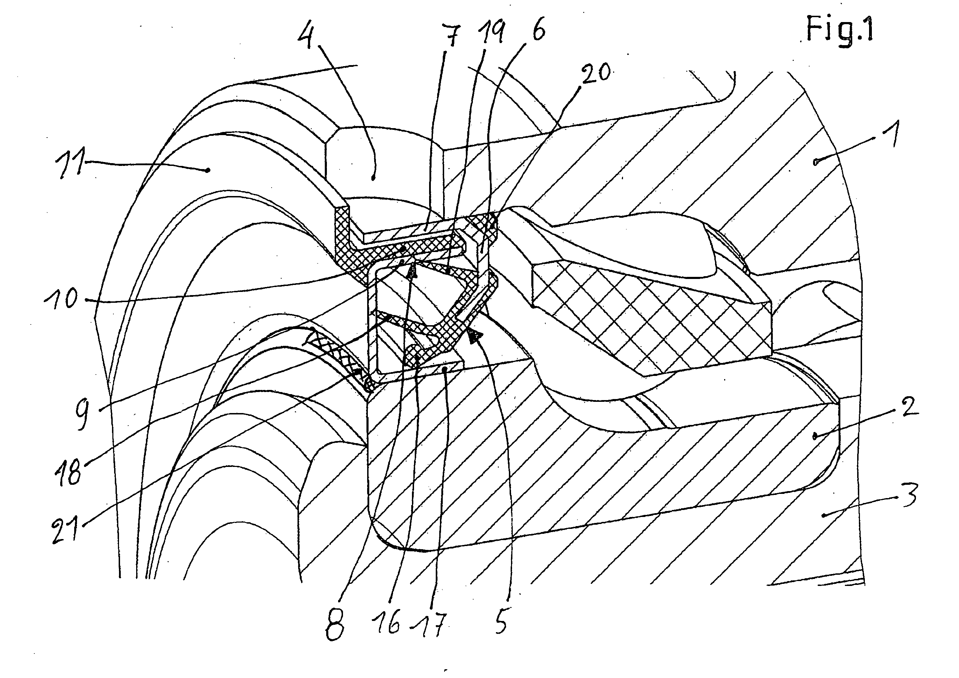

- Figur 1:: einen Teilschnitt durch eine Lageranordnung und einen Encoder,

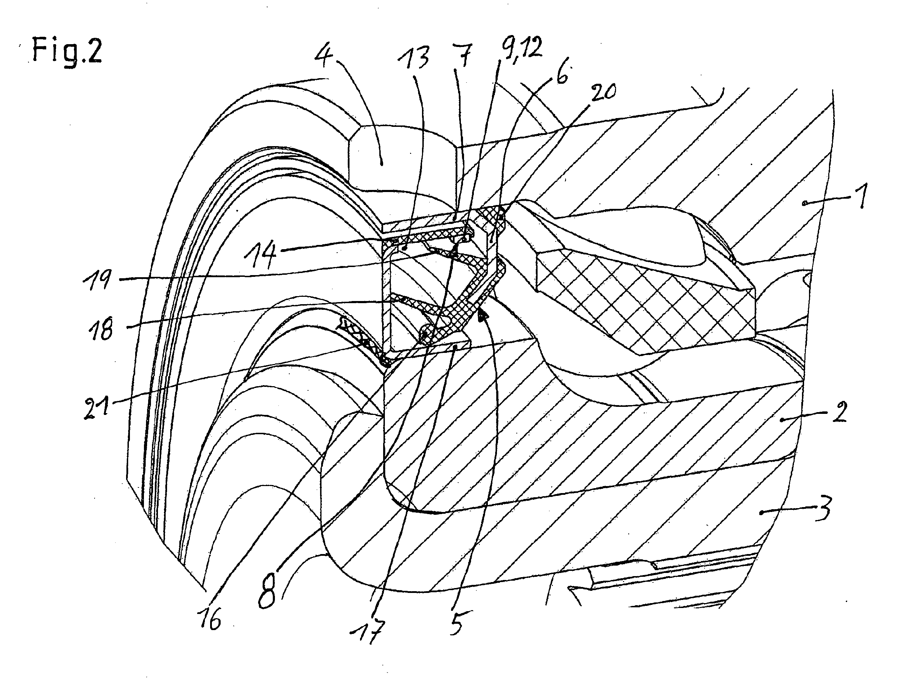

- Figur 2:: einen Teilschnitt gemäß Figur 1 mit modifiziertem Encoder und

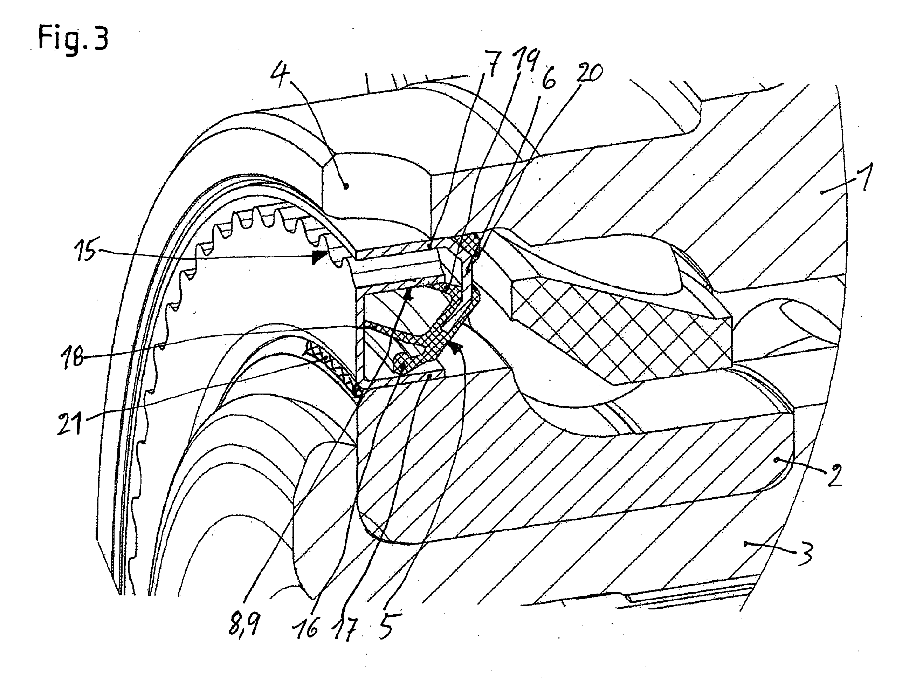

- Figur 3:: einen Teilschnitt gemäß Figur 1 mit nochmals modifiziertem Encoder.

### Detaillierte Beschreibung der Zeichnungen

In den Figuren 1 bis 3 ist, soweit im Einzelnen dargestellt, mit 1 ein Lageraußenring bezeichnet, in dem ein Lagerinnenring 2 drehbar mittels Wälzkörper geführt ist. Innerhalb des Lagerinnenringes 2 ist ein Wellenträger 3 zur Aufnahme der nicht dargestellten Achswelle vorgesehen. Der Lageraußenring 1 weist etwa halbkreisförmige Ausnehmungen 4 auf, die stirnseitig in den Lageraußenring 1 eingearbeitet sind. Innerhalb des Lageraußenringes 1, im Bereich der Ausnehmung 4 ist eine Dichtungsanordnung 5 vorgesehen, die ein Trägerelement 6 aufweist, das aus antiferromagnetischem Werkstoff hergestellt ist. Das Trägerelement 6 weist einen Zylinderflansch 7 auf, der mit der Innenwand des Lageraußenringes 1 in Verbindung steht. Am Lagerinnenring 2 ist ein Impulserzeuger 8 oder Encoder 8 fixiert, der ringförmig ausgebildet und im Querschnitt gesehen U-förmig ausgeführt ist. Der Encoder 8 weist einen äußeren Ringmantel 9 auf, der die Encoder Funktion übernimmt. Der Ringmantel 9 weist gemäß Figur 1 eine Encoderfunktionsschicht 10 auf, die als Kunststoff- oder Elastomerschicht ausgebildet und mit magnetischen Partikeln angefüllt ist. Diese Encoderfunktionsschicht 10 tritt mit dem nicht dargestellten Impulsnehmer an der Ausnehmung 4 in Wirkverbindung, wobei der Zylinderflansch 7 des Trägerelementes 6 nicht stört, da er aus einem nicht ferromagnetischen Werkstoff hergestellt ist. An der Encoderfunktionsschicht 10 ist ein Dichtflansch 11 angeformt, der mit dem Zylinderflansch 7 des Trägerelementes 6 und der Stirnfläche des Lageraußenringes 1 einen Dichtspalt bildet. Am Trägerelement 6 ist eine Innendichtlippe 16 angeformt, die mit einem Innenmantel 17 des Encoders 8 in Wirkverbindung steht, wobei der Innenmantel 17 am Lagerinnenring 2 festgelegt ist. Die Innendichtlippe 16 kann ohne Wurmfeder ausgeführt sein. Es kann aber auch eine Wurmfeder eingesetzt sein. Das Trägerelement 6 weist noch eine Querlippe 18 und eine Schräglippe 19 auf, wobei die Querlippe 18 den Verbindungsstegsteg zwischen dem Innenmantel 17 und dem Ringmantel 9 kontaktiert und die Schräglippe 19 mit der Innenfläche des Ringmantels 9 in Wirkverbindung steht.

Zur besseren statischen Dichtwirkung weist der Zylinderflansch 7 an seiner dem Lager zugewandten inneren Ecke einen Dichtwulst 20 aus elastischem Werkstoff, z. B. Kunststoff oder Elastomer, auf und der Innenmantel 17 an seiner äußeren Ecke einen Dichtring 21 aus entsprechendem Werkstoff. Der Dichtwulst 20 und der Dichtring 21 sind an dem Zylinderflansch 7 und am Innenmantel 17 an vulkanisiert.

In Figur 2 ist der Ringmantel 9 als Encoderträgerblech 12 aus ferromagnetischem Werkstoff mit der Löcher 13 ausgebildet. Die Löcher 13 sind durch eine Kunststoff- oder Elastomerschicht 14, die keine magnetischen Partikel aufweisen, verschlossen.

In Figur 3 weist der Ringmantel 9 eine Zahnstruktur 15 auf und ist aus ferromagnetischem Werkstoff hergestellt, so dass die Zahnstruktur 15 Impulse zum Impulsnehmer weiterleitet. Die Zahnstruktur 15 ist in einfacher Weise durch Umformen des Ringmantels hergestellt.

### Bezugszeichenliste

- 1: Lageraußenring
- 2: Lagerinnenring
- 3: Wellenträger
- 4: Ausnehmung
- 5: Dichtungsanordnung
- 6: Trägerelement
- 7: Zylinderflansch
- 8: Impulserzeuger oder Encoder
- 9: Ringmantel
- 10: Encoderfunktionsschicht
- 11: Dichtflansch
- 12: Encoderträgerblech
- 13: Löcher
- 14: Kunststoff- oder Elastomerschicht
- 15: Zahnstruktur
- 16: Innendichtlippe
- 17: Innenmantel
- 18: Querlippe
- 19: Schräglippe
- 20: Dichtwulst
- 21: Dichtring

## Patentansprüche

1. Lageranordnung mit einem Lager, insbesondere Wälzlager als Radlager für Kraftfahrzeuge, mit einem drehfesten einen Lageraußenring (1) aufnehmenden Lagerträger und einer mittels zumindest eines Lagerinnenringes (2) drehbar geführten Achswelle, mit einer Dichtungsanordnung (5) zwischen den Lagerringen, mit einem Encodersystem mit einem ringförmigen, magnetischen Impulserzeuger (8), auch Encoder (8) bezeichnet, der mit dem Lagerinnenring (2) verbunden ist, und mit einem Impulsnehmer, der am Lageraußenring (1) befestigt ist, wobei der magnetische Impulserzeuger (8) oder Encoder (8) als Ringmantel (9) ausgebildet und der Impulsnehmer radial zum Ringmantel (9) angeordnet ist, **dadurch gekennzeichnet, dass** der Lageraußenring (1) zumindest eine Ausnehmung (4) für den Impulsnehmer aufweist, die als durchgehende radiale Öffnung ausgebildet und am Rand des Lageraußenringes (1) angeordnet ist, dass die Dichtungsanordnung (5) ein Trägerelement (6) aufweist, das mit einem Zylinderflansch (7) innerhalb des Lageraußenringes (1) im Bereich der Ausnehmung (4) fixiert ist, wobei das Trägerelement (6) aus antiferromagnetischem Werkstoff hergestellt ist, und dass der Ringmantel (9) innerhalb des Zylinderflansches (7) des Trägerelementes (6) angeordnet ist.

2. Lageranordnung nach Anspruch 1, **dadurch gekennzeichnet, dass** der Ringmantel (9) eine Encoderfunktionsschicht (10) aus magnetischem Material, vorzugsweise eine Kunststoff- oder Elastomerschicht, angefüllt mit magnetischen Teilchen, aufweist.

3. Lageranordnung nach Anspruch 1, **dadurch gekennzeichnet, dass** der Ringmantel (9) ein Encoderträgerblech (12) aus ferromagnetischem Werkstoff mit Löchern (13) aufweist, die durch nicht magnetischen Kunststoff oder Elastomer verschlossen sind.

4. Lageranordnung nach Anspruch 1, **dadurch gekennzeichnet, dass** der Ringmantel (9) eine Zahnstruktur (15) aufweist, und aus ferromagnetischem Werkstoff hergestellt ist.

5. Lageranordnung nach Anspruch 4, **dadurch gekennzeichnet, dass** die Zahnstruktur (15) durch Umformen des Ringmantels (9) hergestellt ist.

6. Lageranordnung nach einem der vorhergehenden Ansprüche, **dadurch gekennzeichnet, dass** der Ringmantel (9) einen radialen Dichtflansch (11) aufweist, der den Zylinderflansch (7) des Trägerelementes (6) überragt und mit diesem und/oder mit der Stirnfläche des Lageraußenringes (1) oder Lagerträgers einen Dichtspalt bildet.

## Claims

1. Bearing arrangement having a bearing, in particular anti-friction bearing as wheel bearing for motor vehicles, having a rotationally fixed bearing carrier which receives a bearing outer ring (1), and an axle shaft which is guided rotatably by means of at least one bearing inner ring (2), having a seal arrangement (5) between the bearing rings, having an encoder system with an annular, magnetic pulse generator (8), also called an encoder (8), which is connected to the bearing inner ring (2), and with a pulse sensor which is fastened to the bearing outer ring (1), the magnetic pulse generator (8) or encoder (8) being configured as an annular shell (9), and the pulse sensor being arranged radially with respect to the annular shell (9), **characterized in that** the bearing outer ring (1) has at least one recess (4) for the pulse sensor, which recess (4) is configured as a continuous radial opening and is arranged on the edge of the bearing outer ring (1), **in that** the seal arrangement (5) has a carrier element (6) which is fixed with a cylindrical flange (7) within the bearing outer ring (1) in the region of the recess (4), the carrier element (6) being manufactured from antiferromagnetic material, and **in that** the annular shell (9) is arranged within the cylindrical flange (7) of the carrier element (6).

2. Bearing arrangement according to Claim 1, **characterized in that** the annular shell (9) has an encoder functional layer (10) made from magnetic material, preferably a plastic or elastomer layer, filled with magnetic particles.

3. Bearing arrangement according to Claim 1, **characterized in that** the annular shell (9) has an encoder mounting plate (12) which is made from ferromagnetic material with holes (13) which are closed by non-magnetic plastic or elastomer.

4. Bearing arrangement according to Claim 1, **characterized in that** the annular shell (9) has a tooth structure (15) and is manufactured from ferromagnetic material.

5. Bearing arrangement according to Claim 4, **characterized in that** the tooth structure (15) is manufactured by way of reshaping of the annular shell (9).

6. Bearing arrangement according to one of the preceding claims, **characterized in that** the annular shell (9) has a radial sealing flange (11) which protrudes beyond the cylindrical flange (7) of the carrier element (6) and forms a sealing gap with the latter and/or with the end face of the bearing outer ring (1) or bearing carrier.

## Revendications

1. Agencement de palier avec un palier, en particulier palier à roulement comme palier de roue pour des véhicules automobiles, avec un support de palier calé en rotation contenant une bague extérieure de palier (1) et un arbre d'essieu guidé de façon rotative au moyen d'au moins une bague intérieure de palier (2), avec un dispositif d'étanchéité (5) entre les bagues de palier, avec un système de codage avec un générateur d'impulsions magnétique annulaire (8), également appelé codeur (8), qui est relié à la bague intérieure de palier (2), et avec un récepteur d'impulsions, qui est fixé sur la bague extérieure de palier (1), dans lequel le générateur d'impulsions magnétique (8) ou codeur (8) est réalisé en forme d'enveloppe annulaire (9) et le récepteur d'impulsions est disposé radialement à l'enveloppe annulaire (9), **caractérisé en ce que** la bague extérieure de palier (1) présente au moins un évidement (4) pour le générateur d'impulsions, qui est réalisé en forme d'ouverture radiale continue et qui est disposé sur le bord de la bague extérieure de palier (1), **en ce que** le dispositif d'étanchéité (5) présente un élément de support (6), qui est fixé avec une bride cylindrique (7) à l'intérieur de la bague extérieure de palier (1) dans la région de l'évidement (4), dans lequel l'élément de support (6) est fabriqué en matériau antiferromagnétique, et **en ce que** l'enveloppe annulaire (9) est disposée à l'intérieur de la bride cylindrique (7) de l'élément de support (6).

2. Agencement de palier selon la revendication 1, **caractérisé en ce que** l'enveloppe annulaire (9) présente une couche de fonction de codeur (10) en matériau magnétique, de préférence une couche de matière plastique ou d'élastomère, chargée de particules magnétiques.

3. Agencement de palier selon la revendication 1, **caractérisé en ce que** l'enveloppe annulaire (9) présente une tôle de support de codeur (12) en matériau ferromagnétique avec des trous (13), qui sont obturés par une matière plastique ou un élastomère non magnétique.

4. Agencement de palier selon la revendication 1, **caractérisé en ce que** l'enveloppe annulaire (9) présente une structure dentée (15), et est fabriquée en matériau ferromagnétique.

5. Agencement de palier selon la revendication 4, **caractérisé en ce que** la structure dentée (15) est produite par déformation de l'enveloppe annulaire (9).

6. Agencement de palier selon l'une quelconque des revendications précédentes, **caractérisé en ce que** l'enveloppe annulaire (9) présente une bride d'étanchéité radiale (11), qui dépasse la bride cylindrique (7) de l'élément de support (6) et forme avec celle-ci et/ou avec la face frontale de la bague extérieure de palier (1) ou du support de palier une fente d'étanchéité.
